(19) Europäisches Patentamt
European Patent Office
Office européen des brevets

(11) EP 3 786 017 A1

(12) EUROPEAN PATENT APPLICATION
published in accordance with Art. 153(4) EPC

(43) Date of publication:
03.03.2021 Bulletin 2021/09

(51) Int Cl.:
B60W 30/02 (2012.01)  B60W 30/10 (2006.01)

(21) Application number: 19791988.9

(22) Date of filing: 17.04.2019

(86) International application number:
PCT/JP2019/016431

(87) International publication number:
WO 2019/208351 (31.10.2019 Gazette 2019/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.04.2018 JP 2018084845

(71) Applicant: HITACHI AUTOMOTIVE SYSTEMS,
LTD.
Hitachinaka-shi
Ibaraki 312-8503 (JP)

(72) Inventor: IMAMURA, Masamichi
Hitachinaka-shi, Ibaraki 312-8503 (JP)

(74) Representative: Hoefer & Partner Patentanwälte
mbB
Pilgersheimer Straße 20
81543 München (DE)

(54) BRAKING-DRIVING FORCE CONTROL DEVICE, VEHICLE CONTROL DEVICE, VEHICLE CONTROL METHOD, AND VEHICLE CONTROL SYSTEM

(57) The present invention provides a braking/driving force control apparatus capable of performing stable braking/driving force control. A braking/driving force control apparatus acquires a target braking/driving force and a target slip ratio for guiding a vehicle to a target route. The target braking/driving force and the target slip ratio are determined by a vehicle control apparatus based on information regarding a running route of the vehicle that is input from an external world recognition sensor and a physical amount regarding a motion state of the vehicle that is input from a vehicle motion state detection sensor. The braking/driving force control apparatus acquires a slip state braking/driving force for achieving the target slip ratio based on a magnitude relationship between a physical amount regarding a wheel speed that is input from a wheel speed sensor configured to detect the physical amount regarding the wheel speed of the vehicle, and information about the acquired target slip ratio, and outputs a braking/driving force control signal based on this slip state braking/driving force and the target braking/driving force to an actuator regarding braking/driving of the vehicle.

Fig. 2

EP 3 786 017 A1

**Description**

TECHNICAL FIELD

The present invention relates to a braking/driving force control apparatus, a vehicle control apparatus, a vehicle control method, and a vehicle control system.

BACKGROUND ART

Conventionally, there has been proposed a vehicle motion control system configured in the following manner. The vehicle motion control system includes a vehicle control controller and a braking/driving force controller. In an accelerating or decelerating vehicle, the vehicle control controller detects information about the surroundings of the vehicle, determines a target direction of the vehicle, and calculates a target braking force according thereto. The braking/driving force controller receives the target braking force from this controller via communication and generates this braking force. The vehicle motion control system performs braking/driving force control according to the situation around the vehicle, thereby following a preceding vehicle and avoiding an obstacle (for example, refer to PTL 1) .

CITATION LIST

PATENT LITERATURE

[PTL 1] Japanese Patent Application Public Disclosure No. 2012-96618

SUMMARY OF INVENTION

TECHNICAL PROBLEM

However, according to the above-described configuration discussed in PTL 1, supposing that the vehicle is running on a slippy road surface, when the vehicle control controller sets the target braking force to a braking force exceeding a braking force generatable on this road surface, the braking/driving force controller generates a braking force according to this instruction. Therefore, the conventional configuration may cause the wheel to be locked and impair the stability of the vehicle.

One conceivable method to avoid that is to provide the braking/driving force controller with a sensor for detecting a wheel speed to thus detect the lock of the wheel, and ignore the target braking force set by the vehicle control controller and stop the braking force control or control the wheel speed at a slip ratio determined internally by the braking/driving force controller when the wheel is locked. However, this method fails to allow the tire to generate the braking force originally requested by the vehicle control controller, thereby making it difficult to guide the vehicle in the target direction.

An object of the present invention is to provide a braking/driving force control apparatus capable of performing stable braking/driving force control.

Further, another object of the present invention is to provide a vehicle control apparatus, a vehicle control method, and a vehicle control system capable of performing stable braking/driving force control, thereby achieving the improvement of the accuracy regarding the direction of the vehicle and the improvement of the ride comfort on the vehicle.

SOLUTION TO PROBLEM

According to one aspect of the present invention, a braking/driving force control apparatus acquires a target braking/driving force and a target slip ratio for guiding a vehicle to a target route. The target braking/driving force and the target slip ratio are determined by a vehicle control apparatus based on information regarding a running route of the vehicle that is input from an external world recognition sensor and a physical amount regarding a motion state of the vehicle that is input from a vehicle motion state detection sensor. The braking/driving force control apparatus acquires a slip state braking/driving force for achieving the target slip ratio based on a magnitude relationship between a physical amount regarding a wheel speed that is input from a wheel speed sensor configured to detect the physical amount regarding the wheel speed of the vehicle, and information about the acquired target slip ratio, and outputs a braking/driving force control signal based on this slip state braking/driving force and the target braking/driving force to an actuator regarding braking/driving of the vehicle.

Further, according to one aspect of the present invention, a vehicle control apparatus for a vehicle control system is provided. The vehicle control system includes the vehicle control apparatus, and a braking/driving force control apparatus configured to output a braking/driving force control signal acquired based on a signal output from the vehicle control apparatus and a physical amount regarding a wheel speed that is input from a wheel speed sensor configured to detect the physical amount regarding the wheel speed of a vehicle to an actuator regarding braking/driving of the vehicle. The vehicle control apparatus acquires a target braking/driving force and a target slip ratio for guiding the vehicle to a target route based on information regarding a running route of the vehicle that is input from an external world recognition sensor and a physical amount regarding a motion state of the vehicle that is input from a vehicle motion state detection sensor, and outputs them to the braking/driving force control apparatus.

Further, according to one aspect of the present invention, a vehicle control method includes acquiring a target braking/driving force and a target slip ratio by a vehicle control apparatus for guiding a vehicle to a target route based on information regarding a running route of the vehicle that is input from an external world recognition sensor and a physical amount regarding a motion state of the vehicle that is input from a vehicle motion state detection sensor, inputting the target braking/driving force and the target slip ratio from the vehicle control apparatus to a braking/driving force control apparatus, and acquiring a slip state braking/driving force by the vehicle control apparatus for achieving the target slip ratio based on a magnitude relationship between a physical amount regarding a wheel speed that is detected by a wheel speed sensor configured to detect the physical amount regarding the wheel speed of the vehicle, and information about the target slip ratio, and output a braking/driving force control signal based on this slip state braking/driving force and the target braking/driving force to an actuator regarding braking/driving of the vehicle.

Further, according to one aspect of the present invention, a vehicle control system includes a vehicle control apparatus configured to acquire a target braking/driving force and a target slip ratio for guiding a vehicle to a target route based on information regarding a running route of the vehicle that is input from an external world recognition sensor and a physical amount regarding a motion state of the vehicle that is input from a vehicle motion state detection sensor, and a braking/driving force control apparatus configured to receive inputs of the target braking/driving force and the target slip ratio output from the vehicle control apparatus, acquire a slip state braking/driving force for achieving the target slip ratio based on a magnitude relationship between a physical amount regarding a wheel speed that is input from a wheel speed sensor configured to detect the physical amount regarding the wheel speed of the vehicle, and information about the input target slip ratio, and output a braking/driving force control signal based on this slip state braking/driving force and the target braking/driving force to an actuator regarding braking/driving of the vehicle.

According to the above-described aspects, the braking/driving force control apparatus performs not only the control of the braking/driving actuator based on the target braking/driving force but also the slip state braking/driving force control according to the magnitude of the target slip ratio, thereby being able to achieve the stable braking/driving force control.

Further, according to the above-described aspects, the braking/driving force control apparatus can perform the stable braking/driving force control, and therefore the vehicle control apparatus, the vehicle control method, and the vehicle control system using this braking/driving force control apparatus can achieve the improvement of the accuracy regarding the direction of the vehicle and the improvement of the ride comfort on the vehicle.

BRIEF DESCRIPTION OF DRAWINGS

Fig. 1 is a block diagram illustrating a vehicle control controller in a vehicle control system according to an embodiment of the present invention.
Fig. 2 is a block diagram illustrating a braking/driving force controller in the vehicle control system according to the embodiment of the present invention.
Fig. 3 is a flowchart illustrating a first processing procedure by the vehicle control controller according to the embodiment of the present invention.
Fig. 4 is a flowchart illustrating a second processing procedure subsequent to the first processing procedure illustrated in Fig. 3.
Fig. 5 is a flowchart illustrating a third processing procedure subsequent to the second processing procedure illustrated in Fig. 4.
Fig. 6 is a flowchart illustrating a fourth processing procedure subsequent to the third processing procedure illustrated in Fig. 5.
Fig. 7 illustrates a characteristic for deriving a slip ratio from a lateral force by the vehicle control controller.
Fig. 8 is a flowchart illustrating a first processing procedure by the braking/driving force controller according to the embodiment of the present invention.
Fig. 9 is a flowchart illustrating a second processing procedure subsequent to the first processing procedure illustrated in Fig. 8.
Fig. 10 is a timing chart illustrating changes in a braking/driving force and a wheel speed according to the present invention.

Fig. 11 is a timing chart illustrating changes in the braking/driving force and the wheel speed in the configuration of a reference example.

Fig. 12 illustrates a characteristic indicating an error in the lateral force in each control method that is made due to a change in a tire characteristic with respect to each of control specifying the braking/driving force and control specifying the slip ratio.

DESCRIPTION OF EMBODIMENTS

In the following description, an embodiment of the present invention will be described with reference to the drawings.

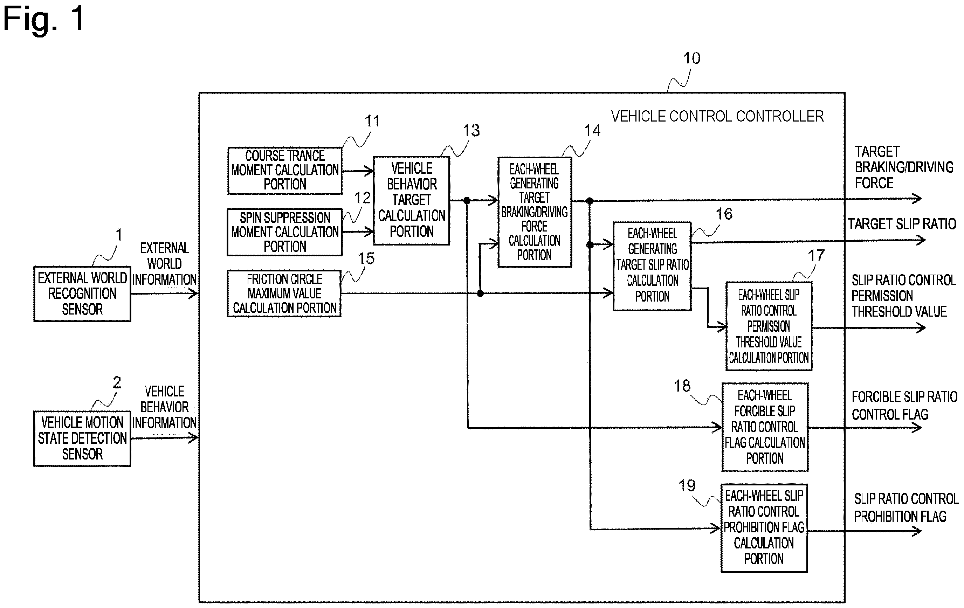

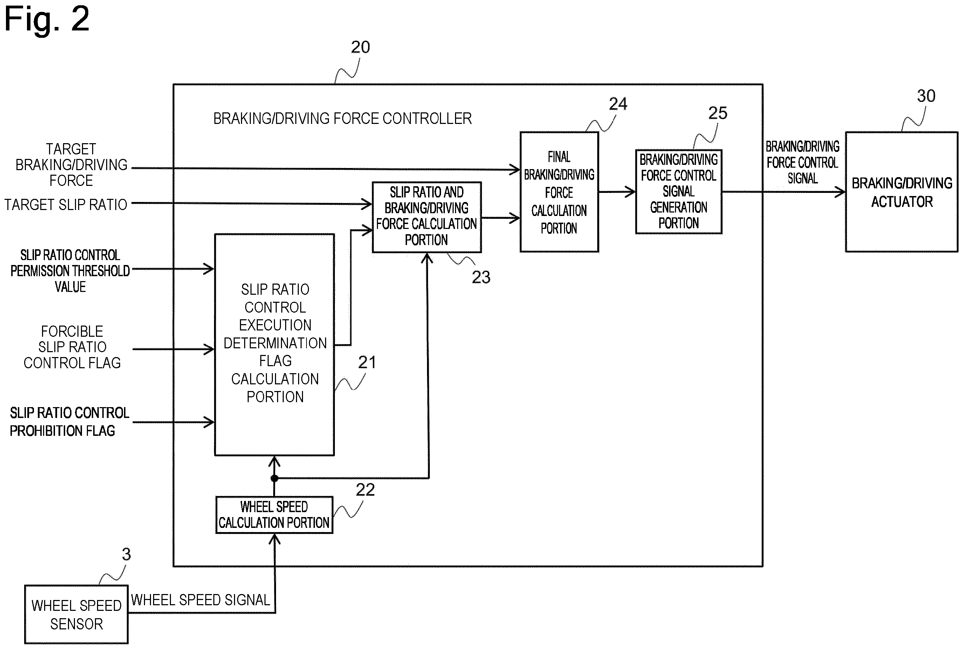

Figs. 1 and 2 illustrate a vehicle control system according to the embodiment of the present invention. In particular, Fig. 1 is a block diagram of a vehicle control controller (a vehicle control apparatus) 10, and Fig. 2 is a block diagram of a braking/driving force controller (a braking/driving force control apparatus) 20. Fig. 1 illustrates the vehicle control controller 10, extracting a portion relating to control by the braking/driving force controller 20, but the vehicle control controller 10 may include, for example, a control portion that performs steering control such as a steering apparatus.

The vehicle control controller 10 illustrated in Fig. 1 receives inputs of vehicle surrounding information (information regarding a running route of the vehicle) acquired by an external world recognition sensor (an external world information sensor) 1 mounted on the vehicle, such as a camera and a GPS (Global Positioning System), and vehicle behavior information (a physical amount regarding a motion state of the vehicle) such as a yaw rate and an acceleration acquired by a vehicle motion state detection sensor (a vehicle behavior sensor) 2 mounted on the vehicle. This vehicle control controller 10 includes a course trace moment calculation portion 11, a spin suppression moment calculation portion 12, a vehicle behavior target calculation portion 13, an each-wheel generating target braking/driving force calculation portion 14, a friction circle maximum value calculation portion 15, an each-wheel generating target slip ratio calculation portion 16, an each-wheel slip ratio control permission threshold value calculation portion 17, an each-wheel forcible slip ratio control flag calculation portion 18, an each-wheel slip ratio control prohibition flag calculation portion 19, and the like. Then, the vehicle control controller 10 outputs a target braking/driving force, a target slip ratio, a slip ratio control permission threshold value, a forcible slip ratio control flag, and a slip ratio control prohibition flag to the braking/driving force controller 20.

The course trace moment calculation portion 11 identifies the current position of the vehicle based on the vehicle surrounding information transmitted from the camera, the GPS, and/or the like, and also calculates course information such as a curvature of a curve ahead of the running vehicle based on, for example, information about a predetermined road route along which the vehicle is planned to run and calculates a moment amount required to be provided to the vehicle to allow the vehicle to run along this curvature.

The spin suppression moment calculation portion 12 calculates a moment amount required to be provided to the vehicle to allow the vehicle to suppress an excessive yaw moment generated on the vehicle based on the vehicle behavior information transmitted from a yaw rate sensor, an acceleration sensor, and/or the like, such as a magnitude of a speed of a change in the yaw rate.

The vehicle behavior target calculation portion 13 calculates a moment amount that the vehicle should generate eventually based on the moment for tracing the course and the moment for suppressing the spin of the vehicle, which are calculated by the course trace moment calculation portion 11 and the spin suppression moment calculation portion 12, respectively. A possible method for handling these calculations is to use a sum value of them or use a maximum value of them.

The each-wheel generating target braking/driving force calculation portion 14 calculates a braking force and a lateral force that each tire wheel should generate to achieve the moment that the vehicle should generate, which is calculated by the vehicle behavior target calculation portion 13. These braking force and lateral force should be controlled so as not to exceed a force that the tire can generate on the road surface, and therefore are acquired by calculating the maximum value of the force that the tire can generate, i.e., the size of a so-called friction circle by the friction circle maximum value calculation portion 15 with use of a signal of the acceleration sensor or the like, and performing limit processing.

The each-wheel generating target slip ratio calculation portion 16 functions to calculate a control target value used when the moment that the vehicle should generate is achieved by reducing the lateral force of the tire. The each-wheel generating target slip ratio calculation portion 16 receives the size of the tire friction circle from the friction circle maximum value calculation portion 15, and calculates the target slip ratio based on the tire generating lateral force calculated by the each-wheel generating target braking/driving force calculation portion 14.

When the target braking/driving force calculated by the each-wheel generating target braking/driving force calculation portion 14 is small, the target slip ratio calculated by the each-wheel generating target slip ratio calculation portion 16 is reduced, and therefore the each-wheel slip ratio control permission threshold value calculation portion 17 sets the present threshold value to a greater value than the target slip ratio so as to prevent an unstable braking/driving force from being generated by the braking/driving force controller 20, which performs braking/driving force feedback control so as to achieve the target slip ratio. Due to this setting, the each-wheel slip ratio control permission threshold value calculation portion 17 prohibits feedback control from being performed even when a disturbance has occurred in the wheel speed signal and the slip ratio detected based on the wheel speed exceeds the target slip ratio.

The each-wheel forcible slip ratio control flag calculation portion 18 forcibly instructs the braking/driving force controller to perform the braking/driving force feedback control so as to achieve the target slip ratio with the aim of significantly reducing the lateral force that the tire generates, for example, when it is determined that the vehicle behavior is considerably disturbed and the moment should be largely corrected based on the moment amount that the vehicle should generate, which is calculated by the vehicle behavior target calculation portion 13.

The each-wheel slip ratio control prohibition flag calculation portion 19 instructs the braking/driving force controller 20 to prohibit the braking/driving force feedback control, for example, when the target braking force calculated by the each-wheel generating target braking/driving force calculation portion 14 is small and the tire lateral force evidently does not have to be reduced, or when the speed of the vehicle is extremely low and the wheel lock is permitted.

The target braking/driving force, the target slip ratio, the slip ratio control permission threshold value, the forcible slip ratio control flag, and the slip ratio control prohibition flag are input from the vehicle control controller 10 to the braking/driving force controller 20 illustrated in Fig. 2. Further, a wheel speed signal (a physical amount regarding a wheel speed) is input from a wheel speed sensor 3, which is mounted on each of the wheels of the vehicle and detects the physical amount regarding the wheel speed. This braking/driving force controller 20 includes a slip ratio control execution determination flag calculation portion 21, a wheel speed calculation portion 22, a slip ratio and braking/driving force calculation portion 23, a final braking/driving force calculation portion 24, a braking/driving force control signal generation portion 25, and the like. Then, the braking/driving force controller 20 outputs a braking/driving force control signal to a braking/driving actuator 30, thereby controlling it. This braking/driving actuator 30 includes, for example, a hydraulic unit that controls the hydraulic pressure of the brake, or an electric motor that controls the brake.

The slip ratio control execution determination flag calculation portion 21 receives the slip ratio control permission threshold value of each of the wheels transmitted from the vehicle control controller 10 and a value acquired by converting the physical amount corresponding to the wheel speed that is input from the wheel speed sensor 3 to the braking/driving force controller 20 into the wheel speed (a wheel speed signal) from the wheel speed calculation portion 22, and calculates a slip ratio control execution flag based on the relationship between the wheel speed and the slip ratio control permission threshold value of each of the wheels. At this time, the slip ratio control execution determination flag calculation portion 21 receives the forcible slip ratio control flag of each of the wheels and the slip ratio control prohibition flag of each of the wheels that are transmitted from the vehicle control controller 10, and carries out the calculation while also taking these pieces of information into consideration.

The slip ratio and braking/driving force calculation portion 23 calculates a braking/driving feedback control amount that the target slip ratio and the wheel speed achieve according to a difference between the target slip ratio of each of the wheels transmitted from the vehicle control controller 10 and the wheel speed calculated by the wheel speed calculation portion 22, when the slip ratio control execution determination flag calculation portion 21 determines to generate the braking/driving force for achieving the target slip ratio. The slip ratio and braking/driving force calculation portion 23 can disable the braking/driving force feedback control by setting the present value to "0", when the vehicle does not generate the braking/driving force for achieving the target slip ratio and generates only the target braking/driving force of each of the wheels transmitted from the vehicle control controller 10.

The final braking/driving force calculation portion 24 calculates a final braking/driving force by receiving the target braking/driving force of each of the wheels transmitted from the vehicle control controller 10 and the braking/driving force feedback control amount calculated by the slip ratio and braking/driving force calculation portion 23, and adding these two values.

Further, the braking/driving force control signal generation portion 25 converts the final braking/driving force calculated by the final braking/driving force calculation portion 24 into a signal format required for the braking/driving actuator 30, such as an electric current value to supply to the actuator, and drives the braking/driving actuator 30 based on this signal (a braking/driving force control signal).

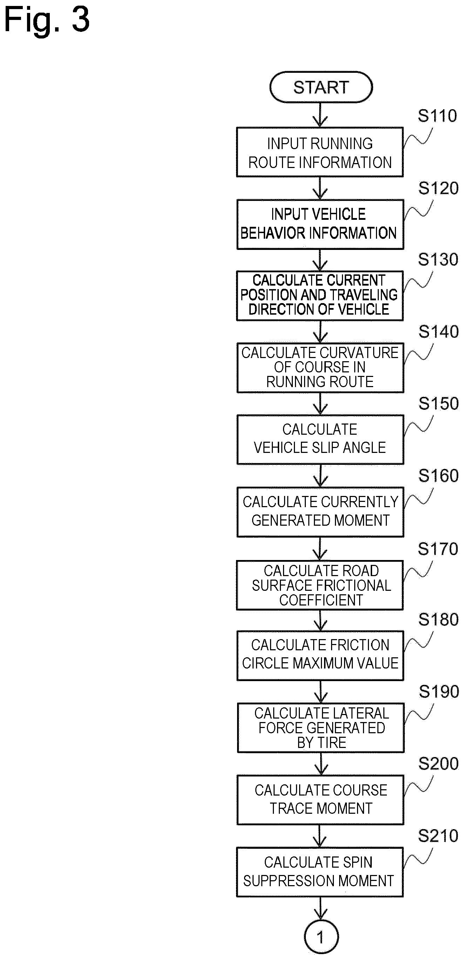

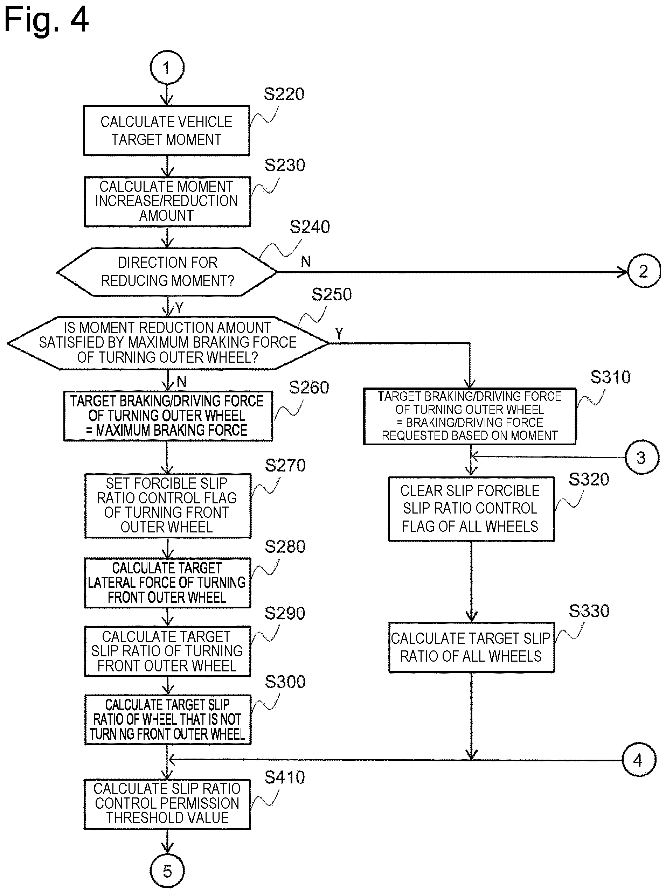

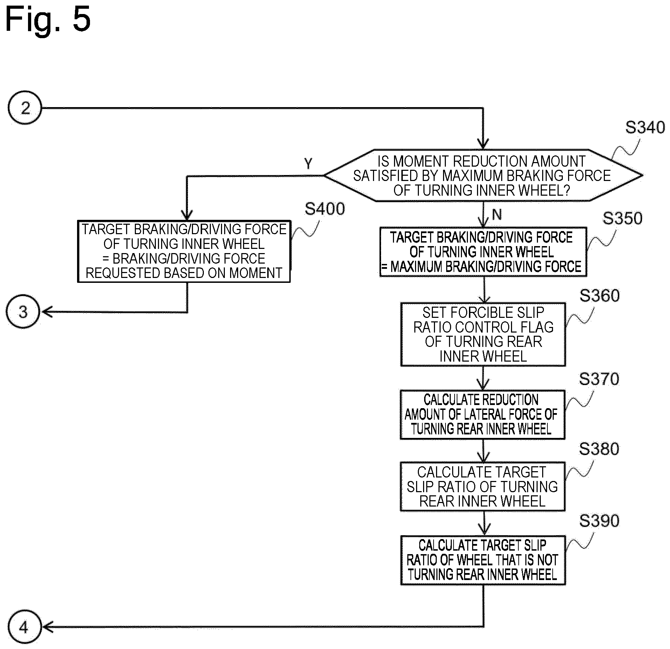

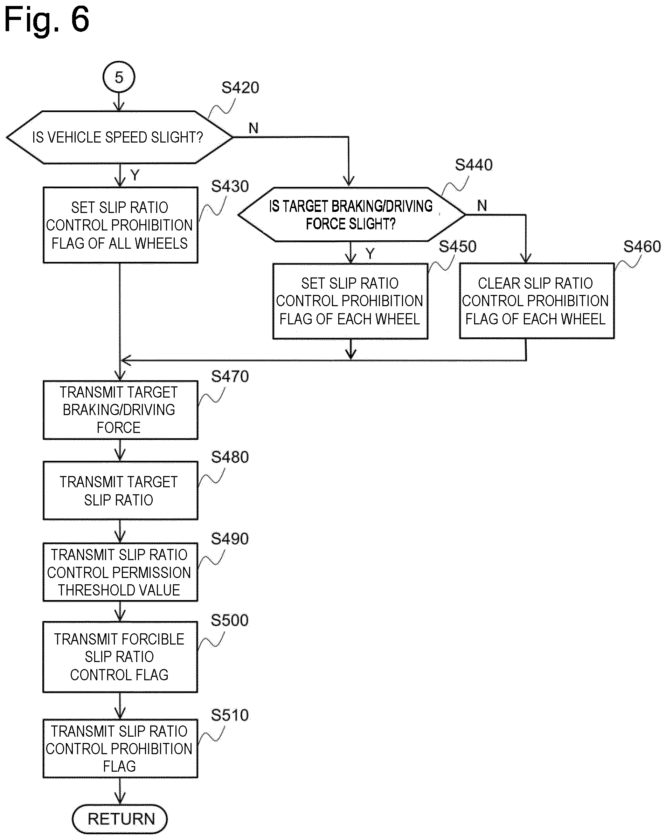

Next, a processing procedure performed by the above-described vehicle control controller 10 will be described in further detail with reference to flowcharts illustrated in Figs. 3 to 6.

First, in step S110, the vehicle control controller 10 receives the vehicle surrounding information by the external world recognition sensor 1 such as the GPS and/or the camera mounted on the vehicle, and also receives information about a road surface on which the vehicle can run and an obstacle (the running route information) based on, for example, the information about the predetermined road route along which the vehicle is planned to run (road map information).

Further, in step S120, the vehicle control controller 10 receives the vehicle behavior information by the vehicle motion state detection sensor 2, such as the yaw rate sensor and the longitudinal and lateral acceleration sensors mounted on the vehicle.

In the next step, step S130, the vehicle control controller 10 identifies the current position and the traveling direction of the vehicle with use of a method such as map matching that roughly determines the current position of the vehicle by, for example, the GPS based on information such as the GPS, or the camera and the road map, recognizes which position the vehicle is located on the road map, recognizes, for example, a white line drawn on the road surface on which the vehicle is running by the camera, and determines which position the vehicle is located on the road.

In step S140, the vehicle control controller 10 recognizes the route along which the vehicle is planned to run based on the current position and the traveling direction of the vehicle, the information about the road map, and the like, and calculates the curvature of the course in the running route predetermined time before the vehicle will run from now.

In step S150, the vehicle control controller 10 calculates a vehicle slip angle β, which is an index for determining the posture of the vehicle. One possible example of the method for this calculation is to calculate the slip angle β according to the following equation, which integrates a difference between the yaw rate and the lateral acceleration.

[Equation 1]

$$\beta = \int \left( \frac{Yg}{Vx} - \frac{d\gamma}{dt} \right) dt$$

In this equation, β represents the slip angle, Yg represents the lateral acceleration, Vx represents the vehicle longitudinal speed, and $d\gamma/dt$ represents the yaw rate.

At the same time, the vehicle control controller 10 calculates a front wheel slip angle βf and a rear wheel slip angle βr according to the following equation.

[Equation 2]

$$\beta_f = \left( \beta + \frac{l_f}{V_x} \frac{d\gamma}{dt} - \delta \right)$$

$$\beta_r = \left( \beta - \frac{l_r}{V_x} \frac{d\gamma}{dt} \right)$$

In this equation, βf represents the front wheel slip angle, βr represents the rear wheel slip angle, lf represents the distance between the front axle and the position of the center of gravity, lr represents the distance between the rear axle and the position of the center of gravity, and δ represents the steering angle.

In the next step, step S160, the vehicle control controller 10 calculates the current vehicle moment generating the above-described vehicle slip angle. One possible example of the method for this calculation is to calculate the current vehicle moment according to the following equation.

[Equation 3]

$$M = I \frac{d^2\gamma}{dt^2}$$

    M: the moment currently generated on the vehicle
    I: the vehicle inertial moment
    $d2\gamma/dt2$: the differential value of the yaw rate.

In the subsequent step, step S170, the vehicle control controller 10 calculates a road surface frictional coefficient of the road on which the vehicle is currently running. The road surface frictional coefficient can generate at least a force for maintaining the longitudinal and lateral accelerations currently generated on the vehicle, and therefore can be expressed in the following manner.

[Equation 4]

$$F = \mu W$$

$$F = mG$$

    F: the force applied to the vehicle

μ: the road surface frictional coefficient
W: the vertical load
m: the mass of the vehicle
G: the vehicle acceleration

The road surface frictional coefficient μ can be calculated according to the following equation by eliminating the force F applied to the vehicle by the above-described equation, and calculating the vehicle acceleration G as a composition of the longitudinal acceleration Xg and the lateral acceleration Yg, assuming that the vertical load W and the vehicle mass m are equal to each other.

[Equation 5]

$$\mu = \sqrt{Xg^2 + Yg^2}$$

In the next step, step S180, the vehicle control controller 10 calculates a friction circle maximum value Qtmax as the maximum force that the tire can generate.

The friction circle is calculated by multiplying the road surface frictional coefficient μ calculated in step S170 by the vertical load applied to each of the wheels.

[Equation 6]

$$Qtmax_{(fl)} = \mu W_{(fl)}$$

$$Qtmax_{(fr)} = \mu W_{(fr)}$$

$$Qtmax_{(rl)} = \mu W_{(rl)}$$

$$Qtmax_{(rr)} = \mu W_{(rr)}$$

In this equation, Qtmax(-) and W(-) represent the friction circle maximum value (the indexes fl, fr, rl, and rr represent the front left wheel, the front right wheel, the rear left wheel, and the rear right wheel, respectively) and the vertical load on each of the wheels, respectively, and the vertical load on each of the wheels is set based on the predetermined specifications of the vehicle.

In step S190, the vehicle control controller 10 calculates a lateral force Sf currently generated by the tire. The following is an example of an equation indicating balance among the lateral acceleration, the yaw moment, and the lateral force.

[Equation 7]

$$m\,Yg = Sf_f + Sf_r$$

$$I\frac{d^2\gamma}{dt^2} = l_f\,Sf_f - l_r\,Sf_r$$

Sff: the lateral force of the two front wheels
Sfr: the lateral force of the two rear wheels

From this equation, the front wheel lateral force and the rear wheel lateral force Sff and Sfr are calculated in the following manner.

[Equation 8]

$$Sf_r = \frac{l_f\,m\,Yg - I\frac{d^2\gamma}{dt^2}}{l_f + l_r}$$

$$Sf_f = m\,Yg - Sf_r$$

In the next step, step S200, the vehicle control controller 10 calculates a course trace moment target value Mc for turning along the course curvature determined in step S140. Based on the course curvature $1/\rho$ ($\rho$: a turning radius) and the vehicle speed V, a yaw rate $d\gamma c/dt$ required to run along this course curvature is calculated according to the following equation.

[Equation 9]

$$\frac{d\gamma_c}{dt} = V\frac{1}{\rho}$$

The moment Mc required to allow the current yaw rate $d\gamma/dt$ to match the yaw rate according to the curvature by the time the vehicle reaches the target position is indicated by the following equation.

[Equation 10]

$$Mc = I\frac{\frac{d\gamma_c}{dt} - \frac{d\gamma}{dt}}{\Delta t}$$

$\Delta t$: the time since the current position until the vehicle reaches the target position

In the subsequent step, step S210, the vehicle control controller 10 calculates a spin suppression moment Ms for correcting the vehicle behavior when the vehicle behavior is disturbed. Ms is calculated according to the following equation with use of, for example, the slip angle $\beta$, which is used as an index of the spin state, and a yaw rate differential value $d2\gamma/dt2$.

[Equation 11]

$$Ms = Ks_1\beta + Ks_2\frac{d^2\gamma}{dt^2}$$

Ks1: the gain of the slip angle for the moment control
Ks2: the gain of the yaw rate differential value for the moment control

In step S220, the vehicle control controller 10 calculates a vehicle target moment Mt that should be generated by the vehicle eventually. Mt is calculated with use of a sum value of the moments Mc and Ms determined in steps S200 and S210, respectively.

[Equation 12]

$$Mt = Mc + Ms$$

Alternatively, Mt can also be determined by selecting a higher moment from Mc and Ms.

In step S230, the vehicle control controller 10 calculates a deviation amount $\Delta M$ between the moment currently generated by the vehicle and this target moment. The deviation amount is calculated as a difference between the vehicle generating moment M determined in step S160 and the vehicle target moment calculated in step S220.

[Equation 13]

$$\Delta M = Mt - M$$

Step S240 and steps subsequent thereto indicate a procedure for adding this moment deviation amount to the vehicle moment.

First, in step S240, the vehicle control controller 10 compares the vehicle target moment Mt determined in step S220 and the currently generated moment M calculated in step S160, and determines whether the moment that should be generated by the vehicle is a moment in a direction for reducing the moment or a moment in a direction for increasing the moment. If the signs of Mt and M are opposite from each other, i.e., the direction of the currently generated moment and the direction indicated by the vehicle target moment are opposite from each other, the vehicle control controller 10 determines that the moment that should be generated by the vehicle is a moment in the reduction direction. Further, if the currently generated moment is greater than the target moment even when the signs thereof are the same, the vehicle control controller 10 determines that the moment that should be generated by the vehicle is a moment in the reduction direction. Otherwise, i.e., if the currently generated moment has the same sign as the target moment and is greater than the target moment, the vehicle control controller 10 determines that the moment that should be generated by the vehicle is a moment in the increase direction.

If the moment that should be generated by the vehicle is determined to be a moment in the direction for reducing the moment in step S240, the processing proceeds to step S250. An appropriate method for reducing the vehicle generating moment is to brake a turning outer wheel, and, first, the vehicle control controller 10 determines whether the moment deviation amount is exceeded by the vehicle generating moment when the maximum value of the braking force that the turning outer wheel can generate without reducing the lateral force, i.e., the braking force corresponding to the friction circle maximum value Qtmax calculated in step S180 is applied to the turning outer wheel.

As an example, the front left wheel and the rear left wheel serve as the turning outer wheel when the vehicle generates a clockwise moment, and the vehicle control controller 10 determines whether the moment deviation amount calculated in step S230 can be covered by the moment when applying the braking according to the friction circle maximum value as indicated by the following equation.

[Equation 14]

$$\Delta M > Tred(Qtmax_{(fl)} + Qtmax_{(rl)})$$

Tred: the left and right wheel tire treads/2

When this equation cannot be satisfied, the vehicle control controller 10 determines that even the application of the braking according to the friction circle maximum value cannot achieve the vehicle target moment, and therefore determines to perform slip ratio control for reducing the lateral force. Then, the processing proceeds to step S260.

In step S260, the vehicle control controller 10 sets the friction circle maximum value as the target braking/driving force of the turning outer wheel because the braking force to generate on the tire first is the friction circle maximum value. Taking the above-described case as an example again here, the friction circle maximum value is set to the front left wheel and the rear left wheel as indicated by the following equation.

[Equation 15]

$$Target Fx_{(fl)} = Qtmax_{(fl)}$$
$$Target Fx_{(rl)} = Qtmax_{(rl)}$$

TargetFx(-): the target braking/driving force of each of the wheels

In this case, the turning front outer wheel is the wheel on which it is appropriate to reduce the vehicle generating moment by reducing the lateral force, and, in step S270, the vehicle control controller 10 sets the forcible slip ratio control flag with respect to this wheel.

In step S280, the vehicle control controller 10 calculates a value resulting from subtracting the moment amount that can be generated by the braking force from the moment deviation amount ΔM determined in step S230 as an amount by which the currently generated lateral force should be reduced. Assuming that the currently generated lateral force per front wheel is a half of the lateral force Sff of the two front wheels calculated in step S190, the target lateral force TargetSf is calculated in the following manner, taking the above-described case as an example again here.

[Equation 16]

$$Target Sf_{(fl)} = Sf_f /2 - (\Delta M - Tred(Qtmax_{(fl)} + Qtmax_{(rl)}))/l_f$$

 TargetSf(-): the target lateral force of each of the wheels

In step S290, the vehicle control controller 10 calculates the slip ratio for achieving this target lateral force as the target slip ratio TargetSlip. One embodiment thereof will be described now.

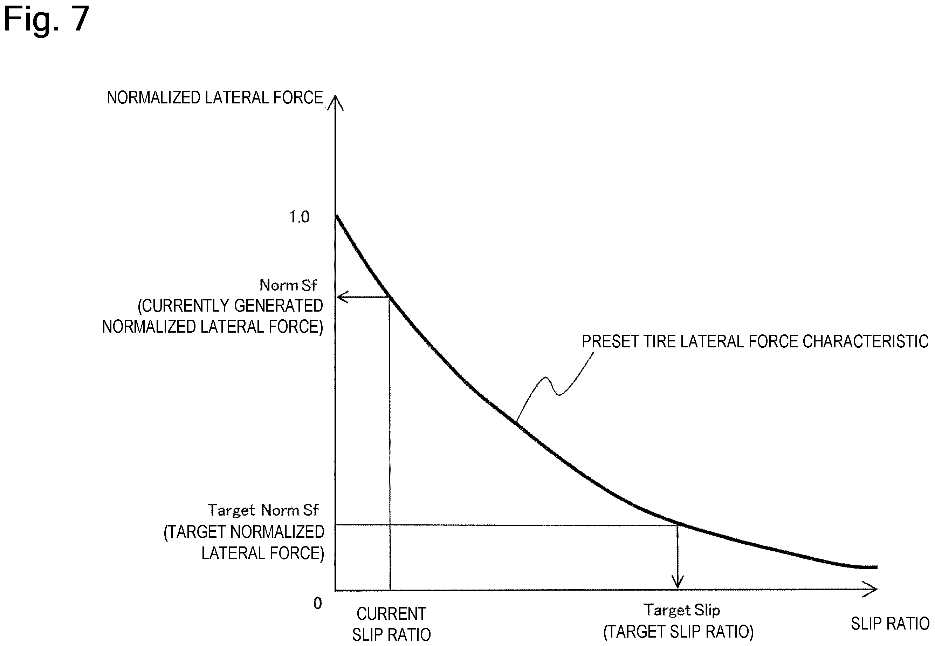

As illustrated in Fig. 7, in the vehicle control controller 10, the lateral force generated by the tire has a normalized tire lateral force characteristic with the peak value placed at "1.0" according to a predetermined slip ratio of the tire. First, the vehicle control controller 10 refers to a currently generated normalized lateral force based on the current slip ratio from the present characteristic. Further, assuming that the lateral force at this time is a half of the lateral force Sff of the two front wheels similarly to the above-described example, a lateral force PeakSf when the slip ratio is "0", i.e., when the normalized lateral force is "1.0" can be calculated according to the following equation.

[Equation 17]

$$\text{Peak Sf}_{(fl)} = \text{Sf}_f / 2 / \text{Norm Sf}_{(fl)}$$

PeakSf(-): the maximum value of the lateral force generatable by each of the wheels

Next, the vehicle control controller 10 calculates a target normalized lateral force TargetNormSf based on the target lateral force TargetSf calculated in step S280 and PeakSf.

[Equation 18]

$$\text{Target Norm Sf}_{(fl)} = \text{Target Sf}_{(fl)} / \text{Peak Sf}_{(fl)}$$

The target slip ratio TargetSlip for reducing the lateral force is calculated by referring to the above-described normalized tire lateral force characteristic as illustrated in Fig. 7 based on this target normalized lateral force.

In the subsequent step, step S300, the vehicle control controller 10 calculates the target slip ratio of a wheel not targeted for the reduction of the lateral force. Because the lateral force does not have to be reduced like steps S280 and S290, the vehicle control controller 10 calculates the slip ratio according to the target braking/driving force TargetFx, for example, as indicated by the following equation.

[Equation 19]

$$\text{Target Slip}_{(-)} = \text{Kt Target Fx}_{(-)}$$

Kt: the gain of conversion between the braking/driving force and the slip ratio.

If the vehicle target moment is determined to be able to be achieved only by applying the brake according to the friction circle maximum value in step S250, the vehicle control controller 10 determines to perform the braking/driving force control without reducing the lateral force, and the processing proceeds to step S310.

One embodiment thereof will be described now.

The moment deviation amount ΔM is first assigned to the braking/driving force of the turning front outer wheel, but the maximum value of the braking/driving force is limited by the friction circle maximum value. Therefore, assuming that an amount corresponding to this insufficiency is distributed to the rear outer wheel, the target braking/driving force is calculated as indicated by the following equation.

[Equation 20]

$$\text{Target Fx}_{(fl)} = \min ( \text{Qtmax}_{(fl)}, \Delta M / \text{Tred} )$$

$$\text{Target Fx}_{(rl)} = \min ( \text{Qtmax}_{(rl)}, \max ( \Delta M / \text{Tred} - \text{Target Fx}_{(fl)} , 0 ))$$

In step S320, the vehicle control controller 10 clears the slip ratio control flag because not performing the slip ratio control. In step S330, the vehicle control controller 10 calculates the target slip ratio TargetSlip by a similar procedure to step S300. Then, the processing returns to a flow in step S410.

If the moment that should be generated by the vehicle is determined to be a moment in the direction for increasing the moment in step S240, the processing proceeds to a flow of steps S340 to S390.

This flow is different from when the moment is reduced in the following manner. An appropriate method for increasing the vehicle generating moment is to apply the braking to a turning inner wheel, and the vehicle control controller 10 first determines whether the turning inner wheel can cover the moment deviation amount without reducing the lateral force. If the turning inner wheel cannot cover the moment deviation amount, the vehicle control controller 10 reduces the lateral force of the turning rear inner wheel. Except for these differences, this flow is similar to the procedure in steps S250 to S330.

If the slip ratio according to the target braking/driving force TargetFx is calculated in the above-described step, step S300, 330, or 390 and if the target braking/driving force is small, the target slip ratio is also reduced according thereto. Therefore, in step S410, the vehicle control controller 10 calculates the slip ratio control permission threshold value so as to add an offset to the target slip ratio with the aim of preventing the braking/driving force from losing the stability by being affected by the slip ratio control caused by an error in the wheel speed or the like. This offset is added so as to prevent the braking/driving force from reacting to a slight slip by reducing the threshold value and preparing a dead zone.

As another embodiment, possible methods also include calculating the acceleration side and the deceleration side independently in light of the improvement of the acceleration performance and the stability. More specifically, the safety at the time of the deceleration can be secured by reducing the threshold value when accelerating the vehicle and increasing the threshold value when decelerating the vehicle.

In steps S420 to S460, the vehicle control controller 10 sets the slip ratio control prohibition flag to prevent the braking/driving force from losing the stability, for example, for the same reason as step S410 or when the vehicle speed is extremely low and the slip control is determined to be unnecessary.

In step S420, the vehicle control controller 10 determines whether the vehicle speed is slight. If the vehicle speed is determined to be slight, the processing proceeds to step S430, in which the vehicle control controller 10 sets the slip ratio control prohibition flag for all the wheels.

When the vehicle speed is high, the processing proceeds to step S440. If the target braking/driving force TargetFx is equal to or smaller than a predetermined target braking/driving force threshold value, the vehicle control controller 10 sets the slip ratio control prohibition flag for this wheel, determining that evidently no request for reducing the lateral force is issued.

In steps S470 to S510, the vehicle control controller 10 transmits the target braking/driving force TargetFx, the target slip ratio TargetSlip, the slip ratio control permission threshold value, the forcible slip ratio control flag, and the slip ratio control prohibition flag calculated in this manner to the braking/driving force controller 20. Alternatively, another possible operation in step S490 is to transmit two types of slip ratio control permission threshold values on the acceleration side and the deceleration side because it is also possible that the threshold value on the acceleration side and the threshold value on the deceleration side are prepared separately as described in the description of step S410.

The control in the braking direction has been described in the above-described embodiment, but control in the driving direction can also be easily realized by a similar processing procedure.

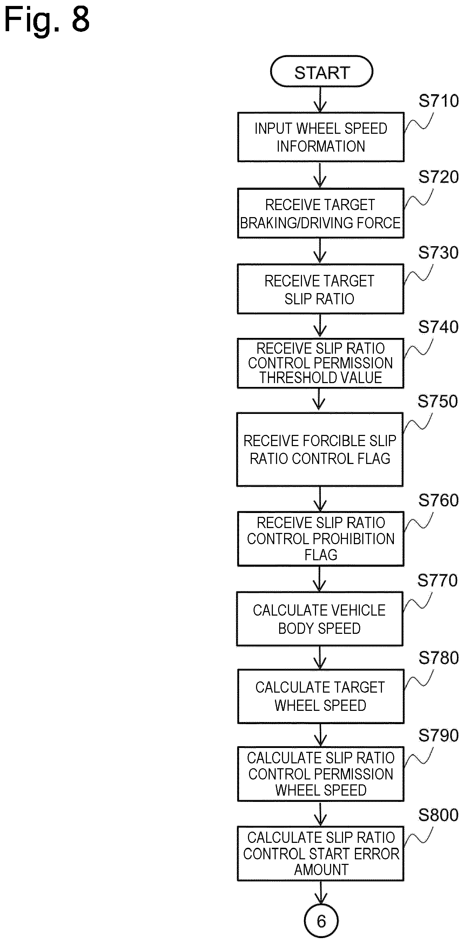

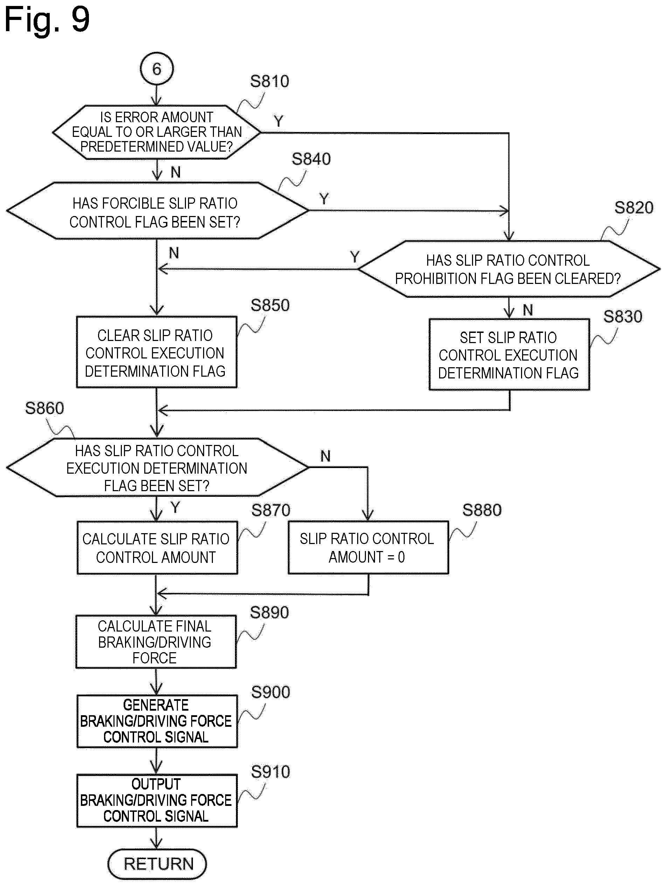

Next, a processing procedure performed by the braking/driving force controller 20 will be described with reference to flowcharts illustrated in Figs. 8 and 9.

First, in step S710, the braking/driving force controller 20 receives the physical amount corresponding to the wheel speed from the wheel speed sensor 3 mounted on each of the wheels of the vehicle, and converts it into the wheel speed Vw.

In steps S720 to S760, the braking/driving force controller 20 receives each of the each-wheel target braking/driving force, the target slip ratio, the slip ratio control permission threshold value, the forcible slip ratio control flag, and the slip ratio control prohibition flag transmitted from the vehicle control controller 10.

In step S770, the braking/driving force controller 20 calculates a vehicle body speed Vx by performing, for example, processing that selects the highest value among the respective wheel speeds of the wheels, or limiter processing on the wheel speed of each of the wheels calculated in step S710.

In the next step, step S780, the braking/driving force controller 20 calculates a target wheel speed TargetVw of each of the wheels, for example, based on the following equation from the target slip ratio TargetSlip received from the vehicle control controller in step S730 and the vehicle body speed calculated in step S770.

[Equation 21]

$$\text{Target} \, Vw_{(-)} = Vx \left( 1 - \text{Target Slip}_{(-)} \right)$$

Vx: the vehicle body speed
TargetVw(-): the target wheel speed of each of the wheels

The present embodiment has been described regarding the configuration in which the target slip ratio is transmitted from the vehicle control controller 10 and the braking/driving force controller 20 calculates the target wheel speed, but there is also another possible configuration in which the vehicle control controller 10 is provided with a unit for the calculation of the vehicle body speed in step S770 and a unit for the present step, step S780, and the vehicle control controller 10 calculates the target wheel speed.

In step S790, the braking/driving force controller 20 adds or subtracts the slip ratio control permission threshold value received from the vehicle control controller 10 in step S740 to or from the above-described target wheel speed TargetVw, thereby calculating a slip ratio control permission wheel speed StartVw. The braking/driving force controller 20 adds the threshold value if the threshold value is a threshold value in the acceleration direction, and subtracts the threshold value if the threshold value is a threshold value in the deceleration direction.

In step S800, the braking/driving force controller 20 calculates a slip ratio control start error amount Start∆Vw based on a difference between the wheel speed of each of the wheels calculated in step S710 and the above-described slip ratio control permission threshold value.

[Equation 22]

$$\text{Start}\,\triangle\text{Vw}_{(-)} = \text{Vw}_{(-)} - \text{Start}\,\,\text{Vw}_{(-)}$$

The present error amount can also be calculated as indicated by the following equation in consideration of a speed of a change in the wheel speed of each of the wheels to further improve a start delay of the slip control.

[Equation 23]

$$\text{Start}\,\triangle\text{Vw}_{(-)} = \text{Kvws1}\,(\,\text{Vw}_{(-)} - \text{Start}\,\,\text{Vw}_{(-)}\,) + \text{Kvws2}\,\triangle\text{Vw}_{(-)}$$

∆Vw(-): the speed of the change in the wheel speed of each of the wheels
Kvws1: the gain of the error in the slip ratio for the control start
Kvws2: the gain of the speed of the change in the wheel speed for the control start

In steps S810 to S850, the braking/driving force controller 20 determines whether to perform the slip control eventually.

First, in step S810, the braking/driving force controller 20 compares the slip ratio control start error amount Start∆Vw with a preset predetermined value. If the error amount is larger than the predetermined value, the braking/driving force controller 20 determines that the slip is significant and the slip control is necessary, and the processing proceeds to step S820.

In step S820, the braking/driving force controller 20 determines whether the vehicle control controller 10 has not set the slip ratio control prohibition flag. If this flag has not been set, in step S830, the braking/driving force controller 20 sets the slip ratio control execution determination flag, determining to perform the slip ratio control.

Even when the error amount is smaller than the predetermined value in step S810, the braking/driving force controller 20 sets the slip ratio control execution determination flag in steps S820 and S830 if the vehicle control controller 10 has set the forcible slip ratio control flag.

If the error amount is smaller than the predetermined value and the forcible slip ratio control flag has also been cleared, and if the slip ratio control prohibition flag is determined to have been set in step S820, the braking/driving force controller 20 sets the slip ratio control execution determination flag, determining that the slip ratio control does not have to be performed.

In step S860, the braking/driving force controller 20 switches the braking/driving force control amount based on the slip ratio control execution determination flag. If the slip ratio control execution determination flag has been set, the processing proceeds to step S870, in with the braking/driving force controller 20 calculates the braking/driving force control amount (a slip state braking/driving force control amount) TargetSlipFx according to the slip ratio, for example, as indicated by the following equation.

[Equation 24]

$$\text{Target Vw Fx}_{(-)} = \text{Kvw1}\,(\,\text{Vw}_{(-)} - \text{Target Vw}_{(-)}\,) + \text{Kvw2}\,\triangle\text{Vw}_{(-)}$$

Kvw1: the gain of the error in the slip ratio for the calculation of the control amount
Kvw2: the gain of the speed of the change in the wheel speed for the calculation of the control amount

If the slip ratio control execution determination flag has been cleared in step S860, in step S880, the braking/driving force controller 20 sets TargetSlipFx to "0" because the slip ratio control has been determined not to have to be performed.

In step S890, the braking/driving force controller 20 calculates a final braking/driving force OuputFx that the braking/driving actuator should achieve. The final braking/driving force can be calculated based on a sum value of the each-wheel target braking/driving force TargetFx transmitted from the vehicle control controller 10 and the above-described target braking/driving force TargetSlipFx.

[Equation 25]

$$\text{Output Fx}_{(-)} = \text{Target Fx}_{(-)} + \text{Target Vw Fx}_{(-)}$$

OutputFx(-): the final braking/driving force of each of the wheels

Because TargetSlipFx is set to "0" when the slip ratio control is determined not to have to be performed in steps S860 and S880, the present embodiment realizes the configuration that outputs TargetFx in normal times and adds the control amount TargetSlipFx for converging the wheel speed to TargetVw when the slip ratio control is determined to be necessary.

Next, in step S900, the braking/driving force controller 20 calculates the magnitude of the control signal for driving the actuator to achieve the final braking/driving force OutputFx. For example, in the case of a system that acquires the braking force by driving a hydraulic pump, an electric current for driving the pump is output according to OutputFx. This portion varies depending on the type of the braking/driving actuator 30.

Then, in step S910, the braking/driving force controller 20 outputs the signal calculated in step S900 to the braking/driving actuator 30. The braking/driving actuator 30 is controlled based on this signal, and generates the final braking/driving force OutputFx on each of the wheels.

Next, the functions of the present embodiment will be described.

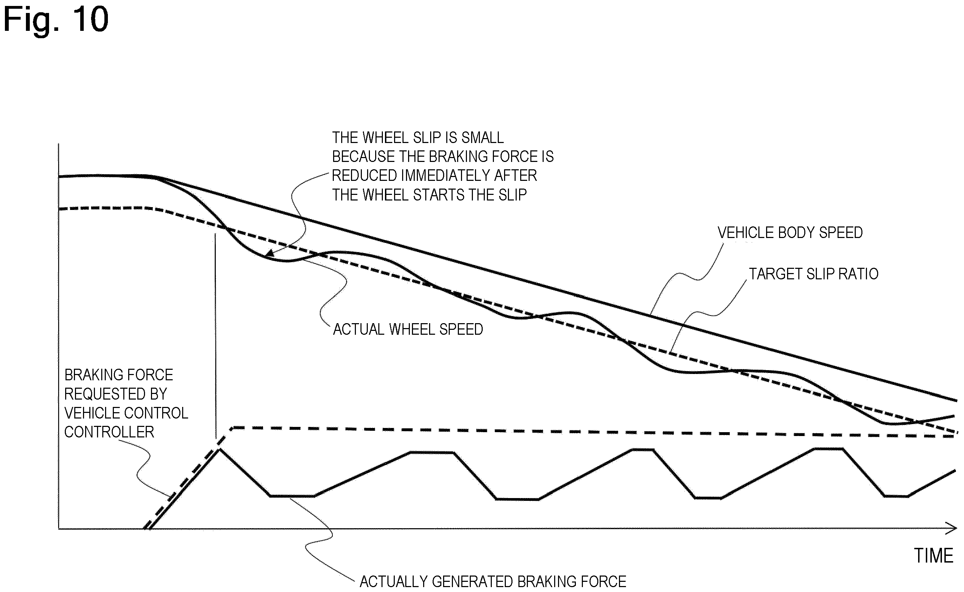

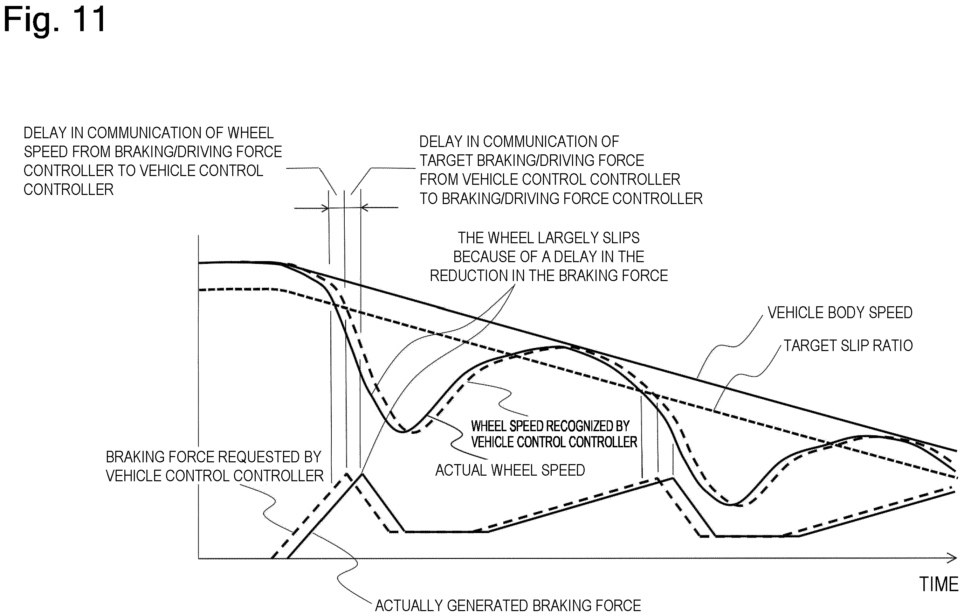

Fig. 10 illustrates changes in the braking/driving force and the wheel speed according to the present embodiment. Further, Fig. 11 illustrates changes in the braking force and the wheel speed in a configuration that transmits the target braking/driving force from the vehicle control controller to the braking/driving force controller and transmits the wheel speed from the braking/driving force controller to the vehicle control controller as a reference example.

When a slip of a wheel has occurred, as indicated by the reference example illustrated in Fig. 11, controlling the slip ratio on the vehicle control controller side leads to a significant difference between the braking force requested by the vehicle control controller and the actually generated braking force due to a communication delay between the vehicle control controller and the braking/driving force controller, i.e., a delay in the communication of the wheel speed from the braking/driving force controller to the vehicle control controller and a delay in the communication of the target driving force from the vehicle control controller to the braking/driving force controller. Therefore, this control results in a delay in the reduction of the braking force, thereby causing a significant slip of the wheel and a delay in the convergence of the wheel speed.

On the other hand, the present configuration collectively assigns the slip detention of the wheel speed and the control of the braking/driving force, which require the responsiveness, to the braking/driving force controller 20 close to the braking/driving actuator 30, and assigns the calculations of the braking/driving force target value and the slip ratio target value, which less require the responsiveness, to the upstream vehicle control controller 10, thereby allowing the braking force to be reduced within the same calculation period as when the wheel slip is detected when the wheel slip has occurred as illustrated in Fig. 10, thus being able to prevent occurrence of an excessive slip and achieve the stable control of the braking force and the lateral force, thus being able to guide the vehicle to the position as expected.

In the following description, configurations recognizable from the above-described embodiment will be described together with advantageous effects thereof.

The vehicle control system, according to one configuration thereof, includes the vehicle control controller 10 that guides the vehicle in the target direction, and the braking/driving force controller 20 that generates the braking force. The vehicle control controller 10 includes the units 1, 11, 12, and 13 that determine the target direction of the vehicle with use of the camera, the GPS, and/or the like, the unit 14 that calculates the braking/driving force or the lateral force for following this target direction, the units 15 and 16 that calculate the target slip ratio for generating this braking/driving force or lateral force, and the unit that transmits the target braking/driving force and the target slip ratio to the braking/driving force controller 20. The braking/driving force controller 20 includes the unit that receives this target braking/driving force and target slip ratio, the units 3 and 22 that detect the physical amount corresponding to the wheel speed, and the units 24 and 25 that control the braking/driving force such as the brake and the power train included in the vehicle. The braking/driving force controller 20 controls the braking/driving force based on the detection units 3 and 22.

According to another configuration of the vehicle control system, the braking/driving force controller 20 includes the units 3 and 22 that detect the physical amount corresponding to the wheel speed, and the unit 21 that detects the wheel lock or slip based on the target slip ratio transmitted from the vehicle control controller 10. The braking/driving force controller 20 controls the braking/driving force so as to generate the braking/driving force according to the target braking/driving force requested by the vehicle control controller 10 until the braking/driving force controller 20 detects the lock, and achieve the target slip ratio requested by the vehicle control controller 10 when detecting the wheel lock or slip.

According to further another configuration, the lock or slip detection threshold value that allows the braking/driving force controller 20 to detect the lock or the slip is transmitted from the vehicle control controller 10 to the braking/driving force controller 20. The braking/driving force controller 20 generates the braking/driving force according to the target braking/driving force requested by the vehicle control controller 10 until this threshold value is satisfied.

According to further another configuration, the vehicle control controller 10 transmits the instruction instructing the braking/driving force controller 20 to forcibly achieve the target slip ratio according to the vehicle state. When receiving this signal, the braking/driving force controller 20 controls the braking/driving force so as to achieve the target slip ratio regardless of whether the lock or slip has occurred.

According to further another configuration, the vehicle control controller 10 transmits the instruction instructing the braking/driving force controller 20 to forcibly achieve the target braking/driving force according to the vehicle state. When receiving this signal, the braking/driving force controller 20 controls the braking/driving force so as to achieve the target braking/driving force regardless of whether the lock or slip has occurred.

In the vehicle control system configured in this manner, the vehicle control controller 10, which guides the vehicle in the target direction, calculates the target braking/driving force according to this target direction and the target slip ratio and transmits them to the braking/driving force controller 20. The braking/driving force controller 20 switches the control of adjusting the braking force to the target braking/driving force and the control of adjusting the braking force to the braking/driving force calculated by the braking/driving force controller 20 itself to achieve the target slip ratio (referred to as the slip state braking/driving force) according to the target slip ratio, or the lock or slip detection threshold value and the wheel speed detected by the braking/driving force controller 20 itself.

Further, when determining that the lateral force generated by the tire should be reduced to guide the vehicle in the target direction, the vehicle control controller 10 instructs the braking/driving force controller 20 to forcibly achieve the target slip ratio and sets this target slip ratio to the slip ratio for reducing the lateral force at the same time.

Further, when the control on the target slip ratio is determined to be unnecessary or when the wheel lock is permitted, such as at the time of control of a slight braking force, the vehicle control controller 10 employs the control of forcibly adjusting the braking force to the target braking/driving force.

A first advantageous effect brought about by the above-described configurations is as follows. Constantly performing the braking/driving force control so as to achieve the target slip ratio wound make the braking/driving force control liable to instability due to, for example, an error in the detection of the slip ratio because the target slip ratio is extremely reduced when the target braking/driving force is small. Therefore, the present configurations perform the target braking/driving force control when the target slip ratio is low and performs the control so as to achieve the target slip ratio when the target slip ratio is high, thereby being able to maintain the stable braking/driving control and thus contribute to improving the accuracy of the direction of the vehicle and improving the ride comfort on the vehicle.

A second advantageous effect is as follows. The vehicle control controller 10 calculates the target braking/driving force and the target slip ratio, and the braking/driving force controller 20 controls the braking/driving force. At this time, the present configurations cause the braking/driving force controller 20, which detects the wheel speed, to determine which should be selected, the target braking/driving force or the braking/driving force for achieving the target slip ratio by determining the wheel lock or slip and selecting the control law, thereby being able to control the wheel lock or slip highly responsively without increasing the calculation speed and the communication speed of the controller 20, and thus being able to guide the vehicle in the target direction accurately.

A third advantageous effect is as follows. The vehicle control controller 10 transmits the lock or slip detection threshold value for detecting the wheel lock or slip to the braking/driving force controller 20, and therefore the control is switched from the braking/driving force control based on the target braking/driving force to the braking/driving force control directed to achieving the target slip ratio (the slip state braking/driving force control) at least in a state that the slip is determined to exceed the target slip ratio. As a result, the present configurations can prevent the control from being mistakenly switched to the control directed to achieving the target slip ratio and a change in the braking/driving force from being induced when the wheel speed largely fluctuates in a region where the above-described target slip ratio is extremely low, such as a bad road. Further, this threshold value is changed according to the vehicle state by the vehicle control controller 10. For example, increasing/reducing the threshold value according to the distance to the preceding vehicle allows the control to be switched to the slip state braking/driving force control directed to achieving the target slip ratio when the distance to the preceding vehicle is shortened, thereby being able to avoid such an incident that the braking force is reduced and the vehicle collides with the preceding vehicle. In other words, when the vehicle approaches the preceding vehicle, the present configurations increase the offset, thereby preventing the actuation of emergency brake from being interrupted.

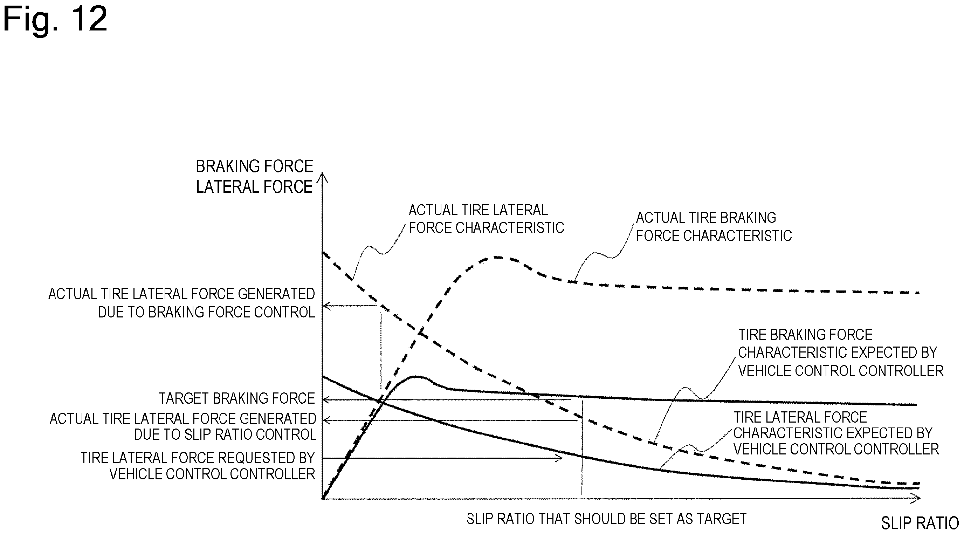

A fourth advantageous effect is as follows. When the vehicle control controller 10 determines that the vehicle behavior is disturbed due to, for example, oversteer, this controller 10 applies the braking on the front outer wheel with the aim of reducing the lateral force with the aid of an increase in the braking force and an increase in the slip ratio. Performing the control based on the target braking force at this time would fail to lead to an increase in the slip even when the controller 10 controls the braking force to the target braking force expected to cause a slip with the aim of reducing the tire lateral force, thereby making it difficult to reduce the actually generated tire lateral force, for example, when the peak of the braking force on the actual road surface is high compared to the road surface characteristic identified by the controller 10 as illustrated in Fig. 12. Therefore, the vehicle behavior would not be improved, making it impossible to guide the vehicle in the target direction. Controlling the braking force so as to achieve the slip ratio that should be set as the target at this time can further improve the accuracy of reducing the lateral force. Therefore, the vehicle control controller 10 can improve the vehicle posture by switching the control to the slip state braking/driving force control that forcibly achieves the target slip ratio according to the vehicle behavior.

A fifth advantageous effect is as follows. The preset configurations save time and effort taken to adapt the wheel lock or slip detection threshold value by prohibiting the braking/driving force control that forcibly achieves the target slip ratio independently of the above-described wheel lock or slip detection threshold value. For example, the wheel lock or slip detection threshold value is increased or reduced according to the distance to the preceding vehicle, and, when it is desired to permit the wheel lock and prohibit the braking/driving force control directed to achieving the target slip ratio in the extremely low vehicle speed region, adjusting the threshold value would take time and effort for the adaptation. Therefore, the vehicle control controller 10 can facilitate the adaptation by forcibly switching the control to the braking/driving force control according to the target braking/driving force.

Having described several embodiments of the present invention, the above-described embodiments of the present invention are intended to only facilitate the understanding of the present invention, and are not intended to limit the present invention thereto. The present invention can be modified or improved without departing from the spirit of the present invention, and includes equivalents thereof. Further, the individual components described in the claims and the specification can be arbitrarily combined or omitted within a range that allows them to remain capable of achieving at least a part of the above-described objects or producing at least a part of the above-described advantageous effects.

The present application claims priority under the Paris Convention to Japanese Patent Application No. 2018-84845 filed on April 26, 2018. The entire disclosure of Japanese Patent Application No. 2018-84845 filed on April 26, 2018 including the specification, the claims, the drawings, and the abstract is incorporated herein by reference in its entirety.

REFERENCE SIGN LIST

1 external world recognition sensor
2 vehicle motion state detection sensor
3 wheel speed sensor
10 vehicle control controller (vehicle control apparatus)
11 course trace moment calculation portion
12 spin suppression moment calculation portion
13 vehicle behavior target calculation portion
14 each-wheel generating target braking/driving force calculation portion
15 friction circle maximum value calculation portion
16 each-wheel generating target slip ratio calculation portion
17 each-wheel slip ratio control permission threshold value calculation portion
18 each-wheel forcible slip ratio control flag calculation portion
19 each-wheel slip ratio control prohibition flag calculation portion
20 braking/driving force controller (braking/driving force control apparatus)
21 slip ratio control execution determination flag calculation portion
22 wheel speed calculation portion
23 slip ratio and braking/driving force calculation portion
24 final braking/driving force calculation portion
25 braking/driving force control signal generation portion
30 braking/driving actuator

**Claims**

**1.** A braking/driving force control apparatus,

wherein the braking/driving force control apparatus acquires a target braking/driving force and a target slip ratio for guiding a vehicle to a target route, the target braking/driving force and the target slip ratio being determined by a vehicle control apparatus based on information regarding a running route of the vehicle that is input from an external world recognition sensor and a physical amount regarding a motion state of the vehicle that is input from a vehicle motion state detection sensor, and

wherein the braking/driving force control apparatus acquires a slip state braking/driving force for achieving the target slip ratio based on a magnitude relationship between a physical amount regarding a wheel speed that is input from a wheel speed sensor configured to detect the physical amount regarding the wheel speed of the vehicle, and information about the acquired target slip ratio, and outputs a braking/driving force control signal based on this slip state braking/driving force and the target braking/driving force to an actuator regarding braking/driving of the vehicle.

2. The braking/driving force control apparatus according to claim 1, wherein the braking/driving force control apparatus switches the braking/driving force control signal based on the target braking/driving force input from the vehicle control apparatus and the braking/driving force control signal based on the slip state braking/driving force and outputs one of them to the actuator, or outputs the braking/driving force control signal generated by adding the target braking/driving force and the slip state braking/driving force to the actuator.

3. The braking/driving force control apparatus according to claim 2, wherein the braking/driving force control apparatus corrects the slip state braking/driving force based on a slip ratio control permission threshold value received from the vehicle control apparatus.

4. The braking/driving force control apparatus according to claim 2, wherein the braking/driving force control apparatus selects the braking/driving force control signal based on the slip state braking/driving force based on a forcible slip ratio control flag received from the vehicle control apparatus, and outputs it to the actuator.

5. The braking/driving force control apparatus according to claim 2, wherein, when a deviation amount between a moment generated on the vehicle at the present moment and a target moment is equal to or larger than a predetermined threshold value, the braking/driving force control apparatus selects the braking/driving force control signal based on the slip state braking/driving force and outputs it to the actuator.

6. The braking/driving force control apparatus according to claim 2, wherein the braking/driving force control apparatus does not select the braking/driving force control signal based on the slip state braking/driving force based on a slip ratio control prohibition flag received from the vehicle control apparatus, and selects the braking/driving force control signal based on the target braking/driving force and outputs it to the actuator.

7. A vehicle control apparatus for a vehicle control system,
   wherein the vehicle control system includes
   the vehicle control apparatus, and
   a braking/driving force control apparatus configured to output a braking/driving force control signal acquired based on a signal output from the vehicle control apparatus and a physical amount regarding a wheel speed that is input from a wheel speed sensor configured to detect the physical amount regarding the wheel speed of a vehicle to an actuator regarding braking/driving of the vehicle,
   wherein the vehicle control apparatus acquires a target braking/driving force and a target slip ratio for guiding the vehicle to a target route based on information regarding a running route of the vehicle that is input from an external world recognition sensor and a physical amount regarding a motion state of the vehicle that is input from a vehicle motion state detection sensor, and outputs them to the braking/driving force control apparatus.

8. A vehicle control method comprising:

   acquiring a target braking/driving force and a target slip ratio by a vehicle control apparatus for guiding a vehicle to a target route based on information regarding a running route of the vehicle that is input from an external world recognition sensor and a physical amount regarding a motion state of the vehicle that is input from a vehicle motion state detection sensor;
   inputting the target braking/driving force and the target slip ratio from the vehicle control apparatus to a braking/driving force control apparatus; and
   acquiring a slip state braking/driving force by the vehicle control apparatus for achieving the target slip ratio based on a magnitude relationship between a physical amount regarding a wheel speed that is detected by a wheel speed sensor configured to detect the physical amount regarding the wheel speed of the vehicle, and information about the target slip ratio, and output a braking/driving force control signal based on this slip state braking/driving force and the target braking/driving force to an actuator regarding braking/driving of the vehicle.

9.  A vehicle control system comprising:

    a vehicle control apparatus configured to acquire a target braking/driving force and a target slip ratio for guiding a vehicle to a target route based on information regarding a running route of the vehicle that is input from an external world recognition sensor and a physical amount regarding a motion state of the vehicle that is input from a vehicle motion state detection sensor; and
    a braking/driving force control apparatus configured to receive inputs of the target braking/driving force and the target slip ratio output from the vehicle control apparatus, acquire a slip state braking/driving force for achieving the target slip ratio based on a magnitude relationship between a physical amount regarding a wheel speed that is input from a wheel speed sensor configured to detect the physical amount regarding the wheel speed of the vehicle, and information about the input target slip ratio, and output a braking/driving force control signal based on this slip state braking/driving force and the target braking/driving force to an actuator regarding braking/driving of the vehicle.

10. The vehicle control system according to claim 9, wherein the braking/driving force control apparatus switches the braking/driving force control signal based on the target braking/driving force input from the vehicle control apparatus and the braking/driving force control signal based on the slip state braking/driving force and outputs one of them to the actuator, or outputs the braking/driving force control signal generated by adding the target braking/driving force and the slip state braking/driving force to the actuator.

11. The vehicle control system according to claim 9, wherein the braking/driving force control apparatus corrects the slip state braking/driving force based on a slip ratio control permission threshold value received from the vehicle control apparatus.

12. The vehicle control system according to claim 9, wherein the braking/driving force control apparatus selects the braking/driving force control signal based on the slip state braking/driving force based on a forcible slip ratio control flag received from the vehicle control apparatus, and outputs it to the actuator.

13. The vehicle control system according to claim 9, wherein, when a deviation amount between a moment generated on the vehicle at the present moment and a target moment is equal to or larger than a predetermined threshold value, the braking/driving force control apparatus selects the braking/driving force control signal based on the slip state braking/driving force and outputs it to the actuator.

14. The vehicle control system according to claim 9, wherein the braking/driving force control apparatus does not select the braking/driving force control signal based on the slip state braking/driving force based on a slip ratio control prohibition flag received from the vehicle control apparatus, and selects the braking/driving force control signal based on the target braking/driving force and outputs it to the actuator.

Fig. 1

VEHICLE CONTROL CONTROLLER 10

1 EXTERNAL WORLD RECOGNITION SENSOR → EXTERNAL WORLD INFORMATION

2 VEHICLE MOTION STATE DETECTION SENSOR → VEHICLE BEHAVIOR INFORMATION

11 COURSE TRANCE MOMENT CALCULATION PORTION

12 SPIN SUPPRESSION MOMENT CALCULATION PORTION

15 FRICTION CIRCLE MAXIMUM VALUE CALCULATION PORTION

13 VEHICLE BEHAVIOR TARGET CALCULATION PORTION

14 EACH-WHEEL GENERATING TARGET BRAKING/DRIVING FORCE CALCULATION PORTION

16 EACH-WHEEL GENERATING TARGET SLIP RATIO CALCULATION PORTION

17 EACH-WHEEL SLIP RATIO CONTROL PERMISSION THRESHOLD VALUE CALCULATION PORTION

18 EACH-WHEEL FORCIBLE SLIP RATIO CONTROL FLAG CALCULATION PORTION

19 EACH-WHEEL SLIP RATIO CONTROL PROHIBITION FLAG CALCULATION PORTION

TARGET BRAKING/DRIVING FORCE

TARGET SLIP RATIO

SLIP RATIO CONTROL PERMISSION THRESHOLD VALUE

FORCIBLE SLIP RATIO CONTROL FLAG

SLIP RATIO CONTROL PROHIBITION FLAG

18

# Fig. 2

BRAKING/DRIVING FORCE CONTROLLER — 20

TARGET BRAKING/DRIVING FORCE

TARGET SLIP RATIO

SLIP RATIO CONTROL PERMISSION THRESHOLD VALUE

FORCIBLE SLIP RATIO CONTROL FLAG

SLIP RATIO CONTROL PROHIBITION FLAG

SLIP RATIO CONTROL EXECUTION DETERMINATION FLAG CALCULATION PORTION — 21

SLIP RATIO AND BRAKING/DRIVING FORCE CALCULATION PORTION — 23

FINAL BRAKING/DRIVING FORCE CALCULATION PORTION — 24

BRAKING/DRIVING FORCE CONTROL SIGNAL GENERATION PORTION — 25

WHEEL SPEED CALCULATION PORTION — 22

WHEEL SPEED SIGNAL

WHEEL SPEED SENSOR — 3

BRAKING/DRIVING FORCE CONTROL SIGNAL

BRAKING/DRIVING ACTUATOR — 30

# Fig. 3

```
        ( START )
            │
            ▼                    S110
  ┌─────────────────────┐
  │   INPUT RUNNING     │
  │  ROUTE INFORMATION  │
  └─────────────────────┘
            │
            ▼                    S120
  ┌─────────────────────┐
  │    INPUT VEHICLE    │
  │ BEHAVIOR INFORMATION│
  └─────────────────────┘
            │
            ▼                    S130
  ┌─────────────────────┐
  │  CALCULATE CURRENT  │
  │ POSITION AND TRAVELING│
  │ DIRECTION OF VEHICLE │
  └─────────────────────┘
            │
            ▼                    S140
  ┌─────────────────────┐
  │ CALCULATE CURVATURE │
  │    OF COURSE IN     │
  │   RUNNING ROUTE     │
  └─────────────────────┘
            │
            ▼                    S150
  ┌─────────────────────┐
  │     CALCULATE       │
  │ VEHICLE SLIP ANGLE  │
  └─────────────────────┘
            │
            ▼                    S160
  ┌─────────────────────┐
  │ CALCULATE CURRENTLY │
  │  GENERATED MOMENT   │
  └─────────────────────┘
            │
            ▼                    S170
  ┌─────────────────────┐
  │   CALCULATE ROAD    │
  │ SURFACE FRICTIONAL  │
  │    COEFFICIENT      │
  └─────────────────────┘
            │
            ▼                    S180
  ┌─────────────────────┐
  │ CALCULATE FRICTION  │
  │ CIRCLE MAXIMUM VALUE│
  └─────────────────────┘
            │
            ▼                    S190
  ┌─────────────────────┐
  │  CALCULATE LATERAL  │
  │  FORCE GENERATED    │
  │      BY TIRE        │
  └─────────────────────┘
            │
            ▼                    S200
  ┌─────────────────────┐
  │  CALCULATE COURSE   │
  │    TRACE MOMENT     │
  └─────────────────────┘
            │
            ▼                    S210
  ┌─────────────────────┐
  │   CALCULATE SPIN    │
  │ SUPPRESSION MOMENT  │
  └─────────────────────┘
            │
            ▼
          ( 1 )
```

# Fig. 4

( 1 )

**S220**
CALCULATE VEHICLE
TARGET MOMENT

**S230**
CALCULATE MOMENT
INCREASE/REDUCTION
AMOUNT

**S240**
DIRECTION FOR
REDUCING MOMENT? — N → ( 2 )

Y

**S250**
IS MOMENT REDUCTION AMOUNT
SATISFIED BY MAXIMUM BRAKING FORCE
OF TURNING OUTER WHEEL? — Y

N

**S260**
TARGET BRAKING/DRIVING FORCE
OF TURNING OUTER WHEEL
= MAXIMUM BRAKING FORCE

**S310**
TARGET BRAKING/DRIVING FORCE
OF TURNING OUTER WHEEL
= BRAKING/DRIVING FORCE
REQUESTED BASED ON MOMENT

**S270**
SET FORCIBLE SLIP
RATIO CONTROL FLAG
OF TURNING FRONT
OUTER WHEEL

( 3 )

**S320**
CLEAR SLIP FORCIBLE
SLIP RATIO CONTROL
FLAG OF ALL WHEELS

**S280**
CALCULATE TARGET
LATERAL FORCE OF TURNING
FRONT OUTER WHEEL

**S290**
CALCULATE TARGET
SLIP RATIO OF TURNING
FRONT OUTER WHEEL

**S330**
CALCULATE TARGET SLIP
RATIO OF ALL WHEELS

**S300**
CALCULATE TARGET SLIP
RATIO OF WHEEL THAT IS NOT
TURNING FRONT OUTER WHEEL

( 4 )

**S410**
CALCULATE SLIP RATIO
CONTROL PERMISSION
THRESHOLD VALUE

( 5 )

# Fig. 5

# Fig. 6

5

S420

IS VEHICLE SPEED SLIGHT? — N

Y

S430
SET SLIP RATIO CONTROL PROHIBITION FLAG OF ALL WHEELS

S440
IS TARGET BRAKING/DRIVING FORCE SLIGHT? — N

Y

S450
SET SLIP RATIO CONTROL PROHIBITION FLAG OF EACH WHEEL

S460
CLEAR SLIP RATIO CONTROL PROHIBITION FLAG OF EACH WHEEL

S470
TRANSMIT TARGET BRAKING/DRIVING FORCE

S480
TRANSMIT TARGET SLIP RATIO

S490
TRANSMIT SLIP RATIO CONTROL PERMISSION THRESHOLD VALUE

S500
TRANSMIT FORCIBLE SLIP RATIO CONTROL FLAG

S510
TRANSMIT SLIP RATIO CONTROL PROHIBITION FLAG

RETURN

# Fig. 7

NORMALIZED LATERAL FORCE

1.0

Norm Sf
(CURRENTLY GENERATED
NORMALIZED LATERAL FORCE)

PRESET TIRE LATERAL FORCE CHARACTERISTIC

Target Norm Sf
(TARGET NORMALIZED
LATERAL FORCE)

0

CURRENT
SLIP RATIO

Target Slip
(TARGET SLIP RATIO)

SLIP RATIO

EP 3 786 017 A1

# Fig. 8

```
                    ┌─────────────┐
                    │    START    │
                    └──────┬──────┘
                           │
                           ▼                  S710
              ┌─────────────────────────┐
              │   INPUT WHEEL SPEED      │
              │     INFORMATION          │
              └────────────┬─────────────┘
                           │
                           ▼                  S720
              ┌─────────────────────────┐
              │   RECEIVE TARGET         │
              │ BRAKING/DRIVING FORCE    │
              └────────────┬─────────────┘
                           │
                           ▼                  S730
              ┌─────────────────────────┐
              │   RECEIVE TARGET         │
              │     SLIP RATIO           │
              └────────────┬─────────────┘
                           │
                           ▼                  S740
              ┌─────────────────────────┐
              │   RECEIVE SLIP RATIO     │
              │ CONTROL PERMISSION       │
              │   THRESHOLD VALUE        │
              └────────────┬─────────────┘
                           │
                           ▼                  S750
              ┌─────────────────────────┐
              │  RECEIVE FORCIBLE SLIP   │
              │  RATIO CONTROL FLAG      │
              └────────────┬─────────────┘
                           │
                           ▼                  S760
              ┌─────────────────────────┐
              │   RECEIVE SLIP RATIO     │
              │ CONTROL PROHIBITION      │
              │        FLAG              │
              └────────────┬─────────────┘
                           │
                           ▼                  S770
              ┌─────────────────────────┐
              │   CALCULATE VEHICLE      │
              │     BODY SPEED           │
              └────────────┬─────────────┘
                           │
                           ▼                  S780
              ┌─────────────────────────┐
              │   CALCULATE TARGET       │
              │    WHEEL SPEED           │
              └────────────┬─────────────┘
                           │
                           ▼                  S790
              ┌─────────────────────────┐
              │ CALCULATE SLIP RATIO     │
              │ CONTROL PERMISSION       │
              │    WHEEL SPEED           │
              └────────────┬─────────────┘
                           │
                           ▼                  S800
              ┌─────────────────────────┐
              │ CALCULATE SLIP RATIO     │
              │ CONTROL START ERROR      │
              │      AMOUNT              │
              └────────────┬─────────────┘
                           │
                           ▼
                         ( 6 )
```

# Fig. 9

**S810** IS ERROR AMOUNT EQUAL TO OR LARGER THAN PREDETERMINED VALUE?

**S840** HAS FORCIBLE SLIP RATIO CONTROL FLAG BEEN SET?

**S820** HAS SLIP RATIO CONTROL PROHIBITION FLAG BEEN CLEARED?

**S830** SET SLIP RATIO CONTROL EXECUTION DETERMINATION FLAG

**S850** CLEAR SLIP RATIO CONTROL EXECUTION DETERMINATION FLAG

**S860** HAS SLIP RATIO CONTROL EXECUTION DETERMINATION FLAG BEEN SET?

**S870** CALCULATE SLIP RATIO CONTROL AMOUNT

**S880** SLIP RATIO CONTROL AMOUNT = 0

**S890** CALCULATE FINAL BRAKING/DRIVING FORCE

**S900** GENERATE BRAKING/DRIVING FORCE CONTROL SIGNAL

**S910** OUTPUT BRAKING/DRIVING FORCE CONTROL SIGNAL

RETURN

# Fig. 10

THE WHEEL SLIP IS SMALL
BECAUSE THE BRAKING FORCE IS
REDUCED IMMEDIATELY AFTER
THE WHEEL STARTS THE SLIP

VEHICLE BODY SPEED

TARGET SLIP RATIO

ACTUAL WHEEL SPEED

BRAKING FORCE
REQUESTED BY
VEHICLE CONTROL
CONTROLLER

TIME

ACTUALLY GENERATED BRAKING FORCE

EP 3 786 017 A1

# Fig. 11

DELAY IN COMMUNICATION OF WHEEL
SPEED FROM BRAKING/DRIVING FORCE
CONTROLLER TO VEHICLE CONTROL
CONTROLLER

DELAY IN COMMUNICATION OF
TARGET BRAKING/DRIVING FORCE
FROM VEHICLE CONTROL CONTROLLER
TO BRAKING/DRIVING FORCE CONTROLLER

THE WHEEL LARGELY SLIPS
BECAUSE OF A DELAY IN THE
REDUCTION IN THE BRAKING FORCE

VEHICLE BODY SPEED

TARGET SLIP RATIO

WHEEL SPEED RECOGNIZED BY
VEHICLE CONTROL CONTROLLER

BRAKING FORCE REQUESTED BY
VEHICLE CONTROL CONTROLLER

ACTUAL WHEEL SPEED

ACTUALLY GENERATED BRAKING FORCE

TIME

EP 3 786 017 A1

Fig. 12

## INTERNATIONAL SEARCH REPORT

| International application No. |
|---|
| PCT/JP2019/016431 |

### A. CLASSIFICATION OF SUBJECT MATTER
Int.Cl. B60W30/02(2012.01)i, B60W30/10(2006.01)i

According to International Patent Classification (IPC) or to both national classification and IPC

### B. FIELDS SEARCHED

Minimum documentation searched (classification system followed by classification symbols)
Int.Cl. B60W30/00-50/16, B60T7/12-8/1769, B60T8/32-8/96

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2012/001786 A1 (TOYOTA MOTOR CORP.) 05 January 2012, paragraphs [0018]-[0019], [0101]-[0108], fig. 1 & US 2013/0103264 A1, paragraphs [0019]-[0020], [0106]-[0113], fig. 1 & EP 2589520 A1 & CN 102985305 A | 1-14 |
| Y | JP 4-15153 A (AKEBONO BRAKE INDUSTRY CO., LTD.) 20 January 1992, page 1, lower right column, lines 14-20 & US 5092662 A, BACKGROUND OF THE INVENTION, lines 18-27 & DE 4114345 A1 | 1-14 |
| Y | JP 2002-274410 A (TOYOTA MOTOR CORP.) 25 September 2002, paragraph [0038] (Family: none) | 5, 13 |
| A | JP 2013-60117 A (TOYOTA MOTOR CORP.) 04 April 2013, paragraph [0060] (Family: none) | 5, 13 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 June 2019 (11.06.2019) | 25 June 2019 (25.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**REFERENCES CITED IN THE DESCRIPTION**

**Patent documents cited in the description**

- JP 2012096618 A

- JP 2018084845 A